# EUROPÄISCHE PATENTANMELDUNG

(11) **EP 2 363 266 A2**
(43) Veröffentlichungstag der Anmeldung: **07.09.2011**
(21) Anmeldenummer: 11156814.3
(22) Anmeldetag: 03.03.2011
(51) Int. Cl.: B29C 45/16, B29C 45/76

(54) **Spritzgussverfahren**

(30) Priorität: 03.03.2010 DE 102010002549
(71) Anmelder: Faurecia Kunststoffe Automobilsysteme GmbH, 85057 Ingolstadt (DE)
(72) Erfinder: Leudts, Thorsten, 49090 Osnabrück (DE)
(74) Vertreter: Richardt, Markus Albert

(57) **Zusammenfassung**

Die Erfindung betrifft ein Spritzgussverfahren zur Herstellung eines Trägerelements eines Frontendmoduls für ein Kraftfahrzeug mit zwei Energieabsorptionselementen in einer Kavität (104) eines Werkzeugs (102), wobei das Trägerelement aus einem ersten Werkstoff besteht und die Energieabsorptionselemente aus einem zweiten Werkstoff bestehen, wobei das Verfahren folgende Schritte aufweist:
- gleichzeitiges Einspritzen eines ersten Schmelzstroms des ersten Werkstoffes über eine erste Öffnung und eines zweiten Schmelzstroms des zweiten Werkstoffes über eine zweite Öffnung in die Kavität (104),
- Regelung des Einspritzvorgangs zum Erhalt von zwei formschlüssigen und/oder stoffschlüssigen Verbindungen zwischen dem Trägerelement und den zwei Energieabsorptionselementen,
- Erfassung von Messdaten über den ersten und den zweiten Schmelzstrom an den Ausbildungsorten (126) der formschlüssigen und/oder stoffschlüssigen Verbindungen,
- Anpassung der Regelung zur Optimierung des Einspritzvorgangs in Abhängigkeit von den erfassten Messdaten.

## Beschreibung

Die Erfindung betrifft ein Spritzgussverfahren zur Herstellung eines Trägerelements eines Frontendmoduls für ein Kraftfahrzeug in einer Kavität eines Werkzeugs, ein Computerprogrammprodukt sowie ein Trägerelement für ein Frontendmodul.

Aus dem Stand der Technik sind verschiedene Spritzgussverfahren bekannt. Allgemein wird unter Spritzgießen ein Verfahren verstanden, bei welchem eine Kunststoffrohmasse aufbereitet wird, zum Beispiel in Form der Plastifizierung eines Kunststoffs, und daraufhin dieser plastifizierte Kunststoff in eine Negativform (Kavität) eines Spritzgusswerkzeugs eingespritzt wird. Nach Aushärten dieses Kunststoffs ergibt sich das gewünschte Spritzgussformteil.

Aus der DE 199 08 846 A1 ist ein Verfahren zur Herstellung von Kunststoffbauteilen nach einem Spritzgussverfahren bekannt, bei dem in einer Kavität mindestens zwei Schmelzströme zuführbar sind und bei dem Werkstoffe simultan oder nacheinander eingespritzt werden. Die sich aufeinander zubewegenden Schnellströme bilden einen Übergangsbereich, in welchem sich die Fließfronten zu einem festen Bund vereinigen.

Die DE 4107276 A1 betrifft ein Verfahren zum Herstellen von Spritzgiessteilen mit mindestens einer Bindenaht unter Verwendung von mindestens zwei Schnecken-Plastifizieraggregaten und mindestens zwei unterschiedlichen Kunststoffen, die mit den Plastifizieraggregaten aufgeschmolzen werden und in ein Formwerkzeug eingespritzt werden.

Die US 5556582 A beschreibt ein Verfahren und eine Vorrichtung gemäß welchen ein Schmelzmaterial durch einen Ausgang in eine Schmelzkavität fließen kann, wobei der Ausgang hinsichtlich seiner effektiven Größe dynamisch veränderbar ist, um den Schmelzfluss durch den Ausgang zu steuern.

Die US 20030203064 A1 offenbart ebenfalls ein Verfahren und System mittels welchem der Materialfluss einer Vielzahl von Ausgussöffnungen einer Spritzgießvorrichtung gesteuert werden kann.

Der Erfindung liegt demgegenüber die Aufgabe zugrunde, ein verbessertes Spritzgussverfahren zur Herstellung eines Trägerelements, ein verbessertes Computerprogrammprodukt und ein verbessertes Trägerelement zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Spritzgussverfahren zur Herstellung eines Trägerelements eines Frontendmoduls in einer Kavität eines Werkzeugs geschaffen. Das Trägerelement umfasst Energieabsorptionselemente. Das Trägerelement besteht aus einem ersten Werkstoff und die Energieabsorptionselemente bestehen aus einem zweiten Werkstoff. Das umfasst das Verfahren zunächst den Schritt des gleichzeitigen Einspritzens eines ersten Schmelzstroms des ersten Werkstoffs und eines weiten Schmelzstroms des zweiten Werkstoffs. Ferner umfasst das Verfahren den Schritt der Regelung des Einspritzvorgangs zum Erhalt von formschlüssigen und/oder stoffschlüssigen Verbindungen zwischen dem Trägerelement und den zwei Energieabsorptionselementen. Es werden Messdaten über die beiden Schmelzströme an den Ausbildungsorten der formschlüssigen und/oder stoffschlüssigen Verbindungen erfasst und in Abhängigkeit von den erfassten Messdaten erfolgt eine Anpassung der Regelung zur Optimierung des Einstellvorgangs.

Ausführungsformen der Erfindung haben den Vorteil, dass zur Herstellung eines entsprechenden Trägerelements unter Verwendung des Spritzgussverfahrens vorzugsweise keine weiteren mechanischen Elemente wie beispielsweise Schieber notwendig sind, um die formschlüssige und/oder stoffschlüssige Verbindungen zwischen den unterschiedlichen Werkstoffmaterialien zu bewirken. Ausschließlich unter Regelung des Einspritzvorgangs wird diese Verbindung zwischen den unterschiedlichen Werkstoffmaterialien erhalten, wobei zusätzlich eine Optimierung des Einspritzvorgangs stattfindet.

Beispielsweise ist es möglich, dass während des Einspritzvorgangs anhand der Messdaten ermittelt wird, dass voraussichtlich die beiden Schmelzströme in nicht optimaler Weise an den Ausbildungsorten der formschlüssigen und/oder stoffschlüssigen Verbindungen aufeinandertreffen werden. In diesem Fall ist es möglich, durch entsprechende Anpassung der Regelung den Einspritzvorgang im laufenden Spritzgussverfahren in entsprechender Weise zu optimieren. Außerdem können diese Messdaten auch dazu verwendet werden, um in einem nachfolgenden Spritzgussprozess für ein weiteres in derselben Kavität zu formendes Trägerelement den Einspritzvorgang optimiert durchzuführen.

Es können beispielsweise nur das Trägerelement und die Energieabsorptionselemente mit einem Verfahren nach Ausführungsformen der Erfindung hergestellt werden. Alternativ kann das Trägerelement auch zusammen mit anderen Bauteilen des Frontendmoduls oder auch das ganze Frontendmodul mit einem solchen Verfahren hergestellt werden.

Unter einem Trägerelement wird hier ein Element eines Frontendmoduls für ein Kraftfahrzeug verstanden. Insbesondere wird unter einem Trägerelement der sogenannte Obergurt eines Frontendmoduls verstanden. Unter einem Frontendmodul wird hier insbesondere eine Anordnung von Elementen an der Front eines Kraftfahrzeugs verstanden. Das Frontendmodul kann beispielsweise ein Trägerelement, z.B. einen sogenannten Obergurt, umfassen, das mit einem weiteren Trägerelement und zwei Seitenteilen einen rechteckigen Rahmen bildet. Am unteren Ende dieses rechteckigen Rahmens kann noch ein Querträger angebracht sein, der beispielsweise zur Befestigung eines Schaumstoffteils für den Schutz von Fußgängern ausgebildet ist.

Die Energieabsorptionselemente sind zur Absorption von Energie im Falle eines Unfalls ausgebildet. Die Energieabsorptionselemente bestehen vorzugsweise aus einem Werkstoff, der bei einer Verformung einen großen Energiebetrag absorbiert. Im Gegensatz dazu wird aus Gewichtsgründen für das Trägerelement ein Werkstoff bevorzugt, der besonders leicht ist. Daher ist eine Herstellung der Energieabsorptionselemente aus einem anderen Werkstoff als dem Werkstoff des Trägerelements vorteilhaft.

Mit einem Verfahren nach Ausführungsformen der Erfindung wird ein Trägerelement aus einem ersten Werkstoff mit Energieabsorptionselementen aus einem zweiten Werkstoff geschaffen. Zwischen den beiden Werkstoffen entstehen stoffschlüssige und/oder formschlüssige Verbindungen. Es wird somit die Herstellung des Trägerelements und der Energieabsorptionselemente mit einem einzigen Werkzeug im Spritzgussverfahren ermöglicht, obwohl das Trägerelement und die Energieabsorptionselemente aus verschiedenen Werkstoffen bestehen.

Nach Ausführungsformen der Erfindung ist jedes der Energieabsorptionselemente zur Befestigung an einem Längsträger des Kraftfahrzeugs ausgebildet. Dies kann beispielsweise durch die Anbringung von Löchern in den Energieabsorptionselementen geschehen. In diesem Fall können die Energieabsorptionselemente dann beispielsweise mit Befestigungsmitteln wie Schrauben an den Längsträgern des Kraftfahrzeugs befestigt werden.

Die Befestigung der Energieabsorptionselemente an den Längsträgern ist vorteilhaft, da durch die Energieabsorptionselemente im Falle eines Unfalls kinetische Energie durch eine Verformung der Energieabsorptionselemente absorbiert wird. Somit wird eine Knautschzone geschaffen, die bei einem Unfall verformt wird und somit Energie absorbiert und den Betrag der an die Längsträger übertragene Energie vermindert.

Nach Ausführungsformen der Erfindung handelt es sich bei den Ausbildungsorten der formschlüssigen und/oder stoffschlüssigen Verbindungen um räumlich vorbestimmte und räumlich begrenzte flächenförmige Bereiche der Kavität. In anderen Worten findet durch das gleichzeitige Einspritzen der verschiedenen Schmelzströme kein undefiniertes Vermischen mit einer großflächigen Durchmischungszone statt, sondern die formschlüssigen und/oder stoffschlüssigen Verbindungen bilden sich in konkret räumlich vorbestimmten und auch räumlich begrenzten flächenförmigen Bereichen der Kavität aus. Unter flächenförmig wird hierbei verstanden, dass der Bereich zwar dreidimensional sein kann, jedoch die Ausdehnungsrichtung in der dritten Dimension wesentlich geringer ist als in den anderen beiden Dimensionen dieses räumlichen Bereichs.

Nach einer Ausführungsform der Erfindung umfasst die Erfassung der Messdaten über die beiden Schmelzströme am Ausbildungsort eine Messdatenerfassung unmittelbar an beiden Seiten der flächenförmigen Bereiche der Kavität angrenzenden räumliche Positionen. In anderen Worten ist ein wesentlicher Gedanke dieser Ausführungsform, dass eine Messdatenerfassung auf beiden Seiten der Schmelzströme direkt an den Ausbildungsorten der formschlüssigen und/oder stoffschlüssigen Verbindung erfolgt.

Zum einen lässt sich damit in optimaler Weise erfassen, ob die Ausbildung bzw. Ausformung der formschlüssigen und/oder stoffschlüssigen Verbindung in gewünschter Weise stattfindet. Zum anderen kann damit auf aufwändige Messungen an einer Vielzahl von weiteren Messpunkten in der Kavität verzichtet werden, da durch die Messdatenerfassung an dem besagten Ausbildungsort eine ausreichend aussagekräftige Information über den stattfindenden Einspritzvorgang erhalten werden kann. Dies ist auch insbesondere vor dem Hintergrund relevant, dass Messverfahren, welche einen direkten Kontakt mit den Schmelzströmen erfordern, darunter leiden können, dass aufgrund der hohen Temperaturen der Schmelzströme entsprechende Sensoren ihre Messempfindlichkeit mit der Zeit verändern. Beschränkt sich damit eine Messdatenerfassung ausschließlich auf den Bereich der Kavität, in welchem die formschlüssigen und/oder stoffschlüssigen Verbindungen der unterschiedlichen Werkstoffmaterialien stattfinden, kann daher durch regelmäßiges Austauschen der dort befindlichen beschränkten Anzahl an Sensoren dieser Veränderung der Messempfindlichkeit vorgebeugt werden, ohne jedoch die Problematik einzugehen, dass aufgrund des Austauschens einer Vielzahl in der Kavität vorhandener Sensoren die Gesamtbetriebskosten des entsprechenden Spritzgussverfahrens signifikant erhöht werden.

Somit beschränkt sich vorzugsweise die Erfassung der Messdaten über die beiden Schmelzströme auf die räumlichen Bereiche, die an beide Seiten der flächenförmigen Bereiche der Kavität unmittelbar angrenzen.

Nach einer weiteren Ausführungsform der Erfindung umfassen die Messdaten Temperaturwerte und/oder Druckwerte und/oder Fließgeschwindigkeiten und/oder Viskositätswerte der Schmelzströme. Damit ist in zuverlässiger Weise eine Anpassung der Regelung zur Optimierung des Einspritzvorgangs möglich.

Nach einer weiteren Ausführungsform der Erfindung erfolgt die Erfassung der Messdaten über mehrere Sensoren, wobei jedem Schmelzstrom zumindest ein Sensor zugeordnet ist. Vorzugsweise handelt es sich bei den Sensoren um Sensoren zur drahtlosen Erfassung der Messdaten. Da somit die Sensoren nicht in Kontakt mit den heißen Schmelzströmen geraten, wird eine entsprechende Beeinträchtigung der Sensoren aufgrund von Hitzeeinwirkung und/oder chemischen Reaktionen mit den Sensoren zuverlässig vermieden. Damit wird eine durchgängige Funktionalität des beschriebenen Verfahrens über einen längeren Zeitraum gewährleistet.

Es sei angemerkt, dass es auch in dieser Ausführungsform bevorzugt ist, dass es sich bei der Erfassung der Messdaten über die beiden Schmelzströme an den Ausbildungsorten um eine Messdatenerfassung an unmittelbar an beiden Seiten der flächenförmigen Bereiche der Kavität angrenzenden räumlichen Positionen handelt. Wie bereits oben erwähnt, geht die Erfindung von der Erkenntnis aus, dass eine Messdatenerfassung, die auf diese beiden Seiten der flächenförmigen Bereiche der Kavität angrenzende räumliche Positionen beschränkt ist, ausreichend ist, um eine Anpassung der Regelung zur Optimierung des Einspritzvorgangs vorzunehmen. Damit lässt sich die Gesamtanzahl an benötigten Sensoren minimieren, unabhängig davon, ob es sich nun bei diesen Sensoren um solche handelt, die einen Kontakt mit dem Schmelzstrom erfordern, oder ob es sich um drahtlose Sensoren zur drahtlosen Erfassung der Messdaten handelt.

Nach einer weiteren Ausführungsform der Erfindung umfasst die Regelung des Einspritzvorgangs eine individuelle Regelung des Einspritzvorgangs der einzelnen Schmelzströme. Es sei in diesem Zusammenhang darauf verwiesen, dass unter dem Begriff "gleichzeitiges Einspritzen" nicht notwendigerweise verstanden wird, dass der eigentliche Vorgang des Einspritzens zum exakt gleichen Zeitpunkt initiiert wird. Hierunter wird allgemein verstanden, dass über einen vordefinierten Zeitraum hinweg ein simultanes Einspritzen der verschiedenen Schmelzströme mit den unterschiedlichen Werkstoffmaterialien in die Kavität stattfindet. Die Initiierung des jeweiligen Einspritzvorgangs kann dabei jedoch zeitlich individuell gesteuert werden. Allerdings sind entsprechende Regelungen des Einspritzvorgangs nicht nur auf den Zeitpunkt der Initiierung des Einspritzvorgangs begrenzt, sondern umfassen auch eine individuelle Regelung der Schmelzströme in Bezug auf z.B. Temperatur, Durchfluss, Viskosität und/oder Druck.

Nach einer weiteren Ausführungsform der Erfindung umfasst das Verfahren ferner den Schritt einer Kalibrierung des Einspritzvorgangs durch Regelung des Einspritzvorgangs zum Erhalt der gewünschten formschlüssigen und/oder stoffschlüssigen Verbindung am Ausbildungsort, wobei es sich bei der Anpassung der Regelung um eine Nachregelung auf den kalibrierten Einspritzvorgang handelt.

Eine entsprechende Kalibrierung kann dabei auf unterschiedlichste Weise durchgeführt werden. Möglich ist zum Beispiel eine Kalibrierung durch eine entsprechende experimentelle Versuchsreihe. Bevorzugt ist jedoch eine Kalibrierung durch Verwendung entsprechender mathematischer Modelle, mittels welcher der Einspritzvorgang modelliert werden kann und wodurch die individuelle Regelung des Einspritzvorgangs der einzelnen Schmelzströme festgelegt wird.

Ist einmal ein Einspritzvorgang kalibriert, so kann sich jedoch dennoch beispielsweise aufgrund einer Gesamterwärmung des Spritzgießsystems ergeben, dass die Temperaturen der entsprechenden Schmelzströme nach mehreren Spritzgießvorgängen so hoch sind, dass das gewünschte Spritzgießergebnis am Ausbildungsort der formschlüssigen und/oder stoffschlüssigen Verbindung nicht mehr erreicht wird. Über die Messdatenerfassung können geringste Abweichungen von dem gewünschten Ergebnis rechtzeitig detektiert werden, sodass bei beginnender Abweichung von dem gewünschten Ergebnis eine Nachregelung auf den zuvor kalibrierten Einspritzvorgang möglich ist.

Nach Ausführungsformen der Erfindung ist die Kavität so ausgebildet, dass beim Einspritzen der Schmelzströme das Trägerelement zwischen den Energieabsorptionselementen hohl ausgebildet wird. Dies kann beispielsweise durch einen abgetrennten Bereich innerhalb der Kavität realisiert werden, in den während des Einspritzens kein Werkstoff gelangt und der von dem ersten Werkstoff umschlossen wird. Mit anderen Worten ist das Trägerelement in einem mittleren Bereich als Röhre ausgebildet. Dieser mittlere Bereicht erstreckt sich dabei in der Mitte des Trägerelements bis zu den beiden Enden, an denen sich die Energieabsorptionselemente befinden. Direkt an den Enden ist das Trägerelement allerdings nicht mehr als Röhre ausgebildet, sondern bildet eine Fläche, mit der es jeweils mit einem Energieabsorptionselement stoffschlüssig und/oder formschlüssig verbunden ist.

Eine hohle Ausgestaltung des Trägerelements als Röhre reduziert das Gewicht und bietet dabei eine hohe Steifigkeit gegenüber Verformungen.

Nach Ausführungsformen der Erfindung ist die Kavität so ausgebildet, dass die Energieabsorptionselemente mit einer Röhrenstruktur ausgebildet werden.

Nach Ausführungsformen der Erfindung ist die Kavität so ausgebildet, dass die Energieabsorptionselemente mit einer Wabenstruktur ausgebildet werden.

Nach Ausführungsformen der Erfindung ist die Kavität so ausgebildet, dass die Energieabsorptionselemente mit einer Rippenstruktur ausgebildet werden.

Eine Ausgestaltung der Energieabsorptionselemente in Waben-, Rippen- oder Röhrenstruktur ist vorteilhaft, da solche Energieabsorptionselemente bei einer Verformung mehr Energie absorbieren als nicht strukturierte Energieabsorptionselemente.

Nach Ausführungsformen der Erfindung sind in der Kavität Metallträgerteile so angeordnet, dass die Metallträgerteile zumindest teilweise von dem ersten Werkstoff umschlossen werden. Somit wird ein Hybridbauteil aus dem ersten Werkstoff mit integrierten Metallträgerteilen geschaffen. Dies erhöht die Stabilität des Trägerelements.

In einem weiteren Aspekt betrifft die Erfindung ein Computerprogrammprodukt mit von einem Prozessor ausführbaren Instruktionen zur Durchführung der oben genannten Verfahrensschritte des Verfahrens zur Herstellung eines Kunststoffformteils.

In noch einem weiteren Aspekt betrifft die Erfindung ein Trägerelement mit Energieabsorptionselementen. Das Trägerelement und die Energieabsorptionselemente wurden dabei nach Ausführungsformen der Erfindung hergestellt.

Im Folgenden werden bevorzugte Ausführungsformen anhand der Zeichnungen näher erläutert. Es zeigen:
- Figur 1: ein Blockdiagramm einer Spritzgießvorrichtung,
- Figur 2: ein Flussdiagramm eines Spritzgießverfahrens zur Herstellung eines Kunststoffformteils in einer Kavität eines Werkzeugs,
- Figur 3: eine schematische Darstellung einer Kavität mit zwei Öffnungen,
- Figur 4: eine schematische Darstellung einer Kavität mit drei Öffnungen,
- Figur 5: eine schematische Darstellung eines Trägerelements mit zwei Energieabsorptionselementen, die jeweils in einen Längsträger eines Kraftfahrzeugs hineingeschoben sind, und
- Figur 6: eine schematische Darstellung eines Trägerelements mit zwei Energieabsorptionselementen, die mit Befestigungsmitteln an Längsträgern eines Kraftfahrzeugs befestig sind.

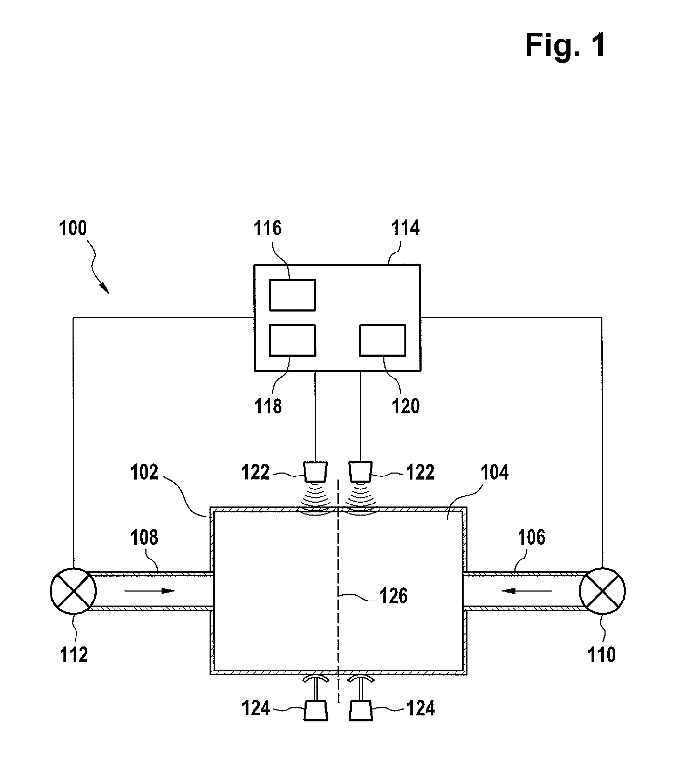

Die Figur 1 zeigt ein Blockdiagramm einer Spritzgießvorrichtung, wobei es sich bei der Spritzgießvorrichtung um ein Mehrkomponenten-Spritzgießwerkzeug 100 handelt. Das Mehrkomponenten-Spritzgießwerkzeug 100 umfasst mindestens zwei getrennte Schmelzleitsysteme 106 und 108, mittels welcher simultanes Einspritzen verschiedener Kunststoffe in eine Kavität 104 des Spritzgießwerkzeugs 102 möglich ist. Zu diesem Zweck weist die Vorrichtung 100 zwei getrennte Spritzeinheiten 110 und 112 auf, wobei dem Schmelzleitsystem 106 die Spritzeinheit 110 und dem Schmelzleitsystem 108 die Spritzeinheit 112 zugeordnet ist. Die Spritzeinheiten 110 und 112 sind dazu ausgebildet, über die Schmelzleitsysteme 106 und 108, wie durch die entsprechenden Pfeile angedeutet, zwei verschiedene Schmelzströme mit unterschiedlichen Werkstoffmaterialien in die Kavität 104 einzuspritzen.

Ziel ist es, mit der Vorrichtung 100 einen spritzgegossenen Werkstoff zu erhalten, welcher an einem vordefinierten Ort eine formschlüssige und/oder stoffschlüssige Verbindung zwischen den beiden Werkstoffmaterialien aufweist, welche über die Spritzeinheiten 110 und 112 eingespritzt wurden. Beispielsweise kann es sich bei diesem Werkstoff um ein Kraftfahrzeug-Frontend handeln.

Nicht gezeigt in Figur 1 ist die Möglichkeit, dass in die Kavität 104 ein Grundkörper des herzustellenden Werkstoffs eingelegt werden kann, was insbesondere dann relevant wird, wenn der Grundkörper aus mehreren Teilen besteht und diese einzelnen Teile über mehrere thermoplastische Kunststoffteile miteinander verbunden werden sollen. In diesem Fall ist es möglich, dass die Werkstoffmaterialien der Schmelzströme an verschiedenen Stellen des Werkstoffs gleichzeitig angespritzt werden.

Die Vorrichtung 100 weist ferner eine Regelvorrichtung 114 auf, wobei die Regelvorrichtung 114 zur Regelung des Einspritzvorgangs zum Erhalt der formschlüssigen und/oder stoffschlüssigen Verbindung zwischen den Werkstoffmaterialien ausgebildet ist. Sensoren 122 und 124 dienen zur Erfassung von Messdaten über die beiden Schmelzströme der Schmelzleitsysteme 106 und 108, zumindest am Ausbildungsort 126 der formschlüssigen und/oder stoffschlüssigen Verbindung, wobei die Regelvorrichtung 114 zur Anpassung der Regelungsoptimierung des Einspritzvorgangs in Abhängigkeit von den erfassten Messdaten ausgebildet ist.

Die Regelvorrichtung selbst weist unter anderem einen Prozessor 116 und einen Speicher 118 auf. In dem Speicher 118 können beispielsweise Kalibrierdaten enthalten sein, mittels welcher die Vorrichtung 110 so programmiert ist, dass über entsprechende Steuerleitungen die Spritzeinheiten 110 und 112 so von der Regelvorrichtung 114 angesteuert werden, dass am Ausbildungsort 126 in gewünschte Weise die beiden Werkstoffmaterialien aufeinandertreffen, sodass die gewünschte formschlüssige und/oder stoffschlüssige Verbindung der Materialien am Ausbildungsort 126 erfolgt.

Die Regelvorrichtung umfasst ferner ein Interface 120, über welches die Spritzeinheiten 110 und 112 sowie die Sensoren 122 und 124 und die Regelvorrichtung 114 zur Datenübertrag von z.B. Messdaten kommunizieren können.

In Figur 1 ist lediglich eine Kommunikationsmöglichkeit der Regelvorrichtung mit den Spritzeinheiten 110 und 112 gezeigt. Dies soll jedoch nicht als Beschränkung der Allgemeinheit verstanden werden. Geregelt werden kann durch die Regelvorrichtung jegliche technische Einheit einer Spritzgießmaschine, wie beispielsweise Plastifizierungseinheiten, Heizeinheiten, Einheiten, mittels derer automatisch ein fertiges in der Kavität 104 hergestelltes Werkstück nach einer vordefinierten Zeit entnommen wird, als auch allgemein Einheiten, welche die Bereitstellung der verschiedenen Werkstoffmaterialien bewirken.

In der Figur 1 gezeigt sind nun insgesamt vier Sensoren 122 und 124. Bei den Sensoren 122 handelt es sich um drahtlose Sensoren, wobei die Sensoren 124 kontaktbehaftete Sensoren sind und damit in direktem Kontakt mit den Schmelzströmen der Schmelzleitsysteme 106 und 108 stehen. Wie in Figur 1 angedeutet, erfolgt die Erfassung der Messdaten über die beiden Schmelzströme an unmittelbar an beide Seiten des Bereichs 126 angrenzenden räumlichen Positionen. Die Sensoren 122 und 124 sind dabei ausschließlich entlang dieses flächenförmigen Bereichs 126 angeordnet, was ausreichend ist, um eine zuverlässige Anpassung der Regelung zur Optimierung des Einspritzvorgangs in Abhängigkeit von den erfassten Messdaten zu erhalten.

Beispielsweise könnte sich nach einigen Spritzgießvorgängen, mittels welchen entsprechende Kunststoffformteile in der Kavität 102 hergestellt wurden, herausstellen, dass die beiden Schmelzströme mit einer gewissen zeitlichen Versetzung am Bereich 126 eintreffen. Würde beispielsweise der Schmelzstrom des Schmelzleitsystems 106 am Bereich 126 zeitlich versetzt vor dem Schmelzstrom des Schmelzleitsystems 108 eintreffen, würde dies dazu führen, dass der Bereich 126 in der Figur 1 nach links verschoben werden würde. Die Sensoren 122 bzw. 124 detektieren in diesem Fall nicht ein gleichzeitiges, sondern ein zeitlich versetztes Eintreffen der sich nähernden Kunststoffmassen. Die gemessene Zeitdifferenz kann daraufhin von der Regelvorrichtung dazu verwendet werden, die entsprechenden Spritzeinheiten 110 und 112 so optimiert anzusteuern, dass die Zeitdifferenz für das Eintreffen der sich nähernden Kunststoffmassen 0 ergibt.

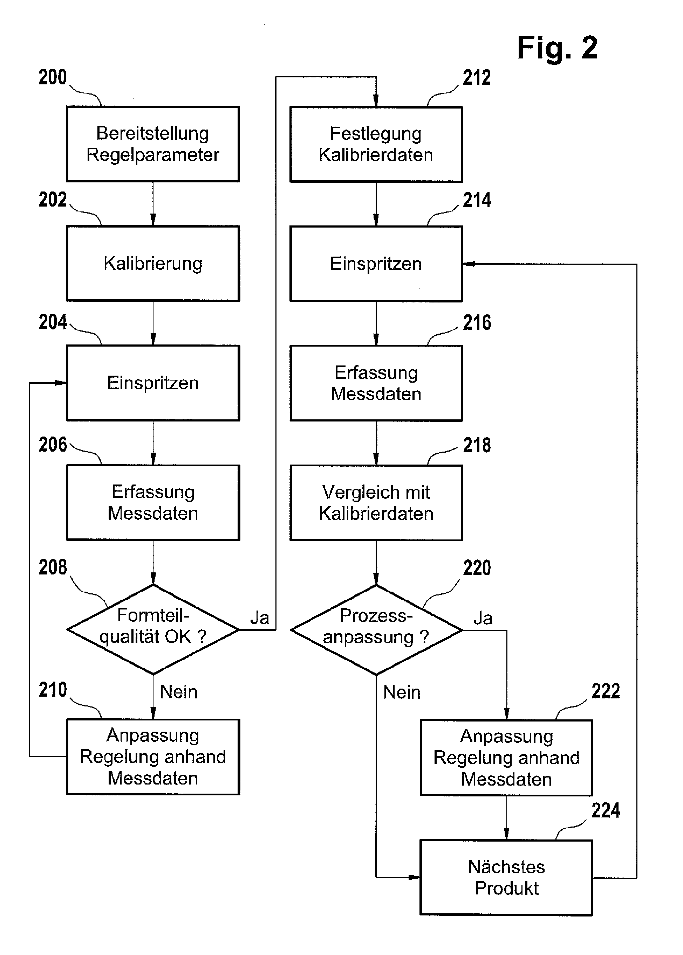

Die Figur 2 zeigt ein Spritzgussverfahren zur Herstellung eines Kunststoffformteils in einer Kavität eines Werkzeugs. Das Verfahren beginnt in Schritt 200 mit der Bereitstellung entsprechender Regelparameter, welche beispielsweise in theoretischen Simulationen bezüglich eines gewünschten Werkstücks und einer gewünschten Kavitätsform zur Regelung eines entsprechenden Einspritzvorgangs erhalten werden können. Diese Regelparameter werden daraufhin in Schritt 202 als vorläufige Kalibrierdaten bereitgestellt.

Nun können jedoch zusätzlich in optionalen experimentellen Kalibrierversuchen optimale Regelparameter bestimmt werden, d.h. Kalibrierdaten, um das gewünschte Spritzgießergebnis zu erhalten.

Dies wird beginnend mit Schritt 204 realisiert, bei welchem gleichzeitig die verschiedenen Schmelzströme mit den unterschiedlichen Werkstoffmaterialien in die Kavität eingespritzt werden. Der Einspritzvorgang wird anhand der vorläufigen Kalibrierdaten so geregelt, dass die gewünschte formschlüssige und/oder stoffschlüssige Verbindung zwischen den unterschiedlichen Werkstoffmaterialien der Schmelzströme erhalten wird.

Während dem Einspritzvorgang erfolgt in Schritt 206 die Erfassung von Messdaten über die beiden Schmelzströme am Ausbildungsort der formschlüssigen und/oder stoffschlüssigen Verbindung. Nachdem der Spritzgießvorgang beendet ist, erfolgt in Schritt 208 eine Überprüfung dahingehend, ob die Qualität des erhaltenen Kunststoffformteils ausreichend ist. Beispielsweise kann überprüft werden, ob eine ausgebildete stoffschlüssige Verbindung zwischen unterschiedlichen Werkstoffmaterialien eine hinreichend Stabilität aufweist, oder ob die beiden Werkstoffmaterialien lediglich lose aneinandergrenzen.

Üblicherweise wird aufgrund des vorläufigen Kalibriervorgangs in den Schritten 200 und 202 bereits die gewünschte Formteilqualität erreicht worden sein. Ist dies jedoch nicht der Fall, erfolgt nach dem Überprüfungsschritt 208 der Schritt 210, in welchem eine Anpassung der Regelung anhand der Messdaten und ggf. anhand der erfassten Formteilqualität erfolgt. Mit dieser angepassten Regelung springt daraufhin das Verfahren erneut zu Schritt 204 und die Schritte des Einspritzens, der Erfassung der Messdaten (206) und der Überprüfung der Formteilqualität (Schritt 208) werden erneut durchlaufen. Erst nach dem endgültig gesichert ist, dass anhand der optimierten Regelparameter eine gewünschte Formteilqualität erreicht werden kann, erfolgt in Schritt 212 eine endgültige Festlegung der Kalibrierdaten.

Es sei darauf verwiesen, dass es sich bei diesen Kalibrierdaten um optimale Regelparameter zum Erhalt der formschlüssigen und/oder stoffschlüssigen Verbindung der beiden Werkstoffmaterialien in einem vordefinierten räumlichen Bereich der Kavität des entsprechenden Spritzgießwerkzeugs handelt.

Die folgenden Schritte 214 - 224 beschreiben nun jenen Teil des Spritzgießverfahrens, mit welchem im Massenverfahren Kunststoffformteile hergestellt werden können. Dieses Verfahren beginnt in Schritt 214 mit dem gleichzeitigen Einspritzen der Werkstoffmaterialien in die beiden Schmelzleitsysteme, woraufhin die Werkstoffmaterialien über die Schmelzleitsysteme in die Kavität geleitet werden. Sensoren erfassen daraufhin Messdaten über die beiden Schmelzströme zumindest am Ausbildungsort der formschlüssigen und/oder stoffschlüssigen Verbindung (Schritt 216). Durch Vergleich mit den in Schritt 212 festgelegten Kalibrierdaten kann nun in Schritt 218 bestimmt werden, ob eine Abweichung vom optimalen Einspritzvorgang, beispielsweise aufgrund von Temperatur- oder Druckschwankungen, gegeben ist.

Daraufhin erfolgt in Schritt 220 eine Entscheidungsfindung, ob der Einspritzprozess in entsprechender Weise angepasst wird, beispielsweise durch eine Anpassung der Regelung des Einspritzvorgangs in Form einer Nachregelung auf den kalibrierten Einspritzvorgang. Ist eine Prozessanpassung in Schritt 220 nötig, so erfolgt in Schritt 222 eine Anpassung der Regelung anhand der in Schritt 216 erfassten Messdaten und das Verfahren endet zunächst in Schritt 224, an welchem das gewünschte Spritzgießprodukt fertiggestellt wird und die Kavität bereit ist zur erneuten Aufnahme der beiden Schmelzströme zur Herstellung eines weiteren Spritzgießprodukts.

Die in Schritt 222 verwendete Anpassung der Regelung des Einspritzvorgangs anhand der Messdaten wird in diesem Fall für den Einspritzvorgang 214 des nächsten Spritzgießprodukts verwendet.

Ist das Ergebnis der Entscheidungsfindung in Schritt 220 jedoch, dass eine Prozessanpassung nicht nötig ist, d.h. die Regelung des Einspritzvorgangs ist bereits optimal, so endet das Verfahren unmittelbar in Schritt 224 mit der Fertigstellung des Spritzgießprodukts und die Kavität ist bereit zur erneuten Aufnahme der Schmelzströme in Schritt 214, ohne dass hierzu eine Anpassung der Regelung anhand der Messdaten nötig geworden wäre.

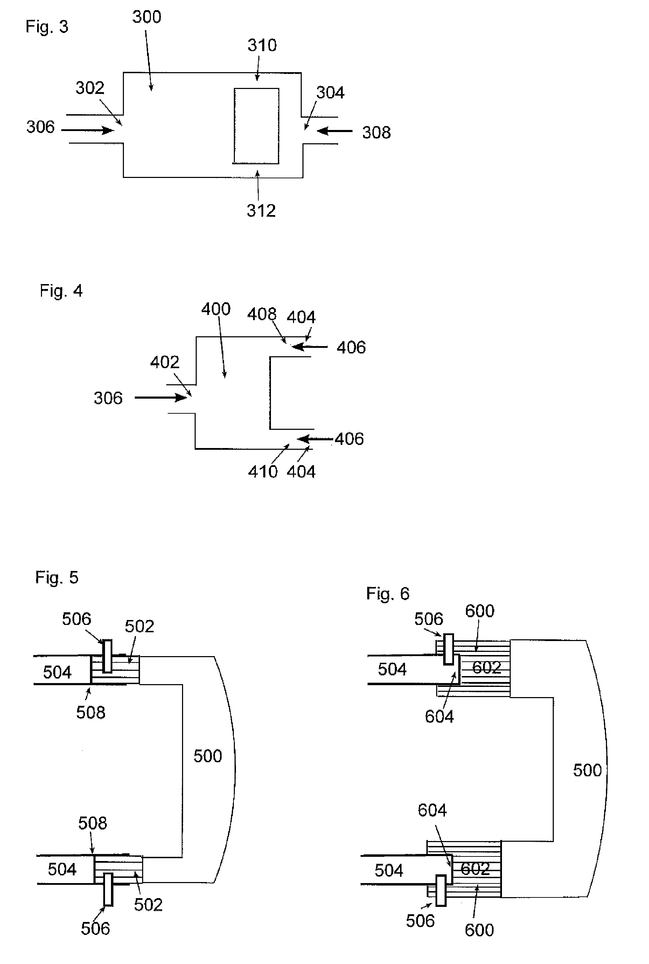

Figur 3 zeigt eine Kavität 300 mit zwei Öffnungen 302 und 304. Über die erste Öffnung 302 wird ein erster Schmelzstrom 306 in die Kavität gespritzt und über die zweite Öffnung 304 ein zweiter Schmelzstrom 308. Der erste Schmelzstrom 306 besteht dabei aus einem ersten Werkstoff und der zweite Schmelzstrom 308 besteht aus einem zweiten Werkstoff. Aus dem ersten Werkstoff wird ein Trägerelement eines Frontendmoduls für ein Kraftfahrzeug geformt. Die Form des Trägerelements wird dabei durch die Form der Kavität bestimmt. In Figur 3 ist aus Übersichtlichkeitsgründen nicht dargestellt, wie die Kavität zur Formung des Trägerelements ausgestaltet ist.

Zwei Enden des Trägerelementes werden in den Bereichen 310 und 312 ausgebildet. Hier treffen die Schmelzströme 306 und 308 aufeinander, sodass sich zwischen dem ersten Werkstoff und dem zweiten Werkstoff eine stoffschlüssige und/oder eine formschlüssige Verbindung ausbildet. Dies erfolgt analog zu dem oben beschriebenen Verfahren. Hierfür werden die Schmelzströme 306 und 308 geregelt und Messdaten werden über die Schmelzströme an den Ausbildungsorten der formschlüssigen und/oder stoffschlüssigen Verbindungen erfasst und zur Anpassung der Regelung verwendet.

Die Energieabsorptionselemente aus dem zweiten Werkstoff werden also angrenzend an die Bereiche 310 und 312 ausgebildet und gehen eine stoffschlüssige und/oder formschlüssige Verbindung mit den Enden des Trägerelements aus dem ersten Werkstoff ein.

Figur 4 zeigt eine alternative Ausgestaltung einer Kavität 400. Die Kavität 400 weist eine erste Öffnung 402 für einen ersten Schmelzstrom 306 auf. Außerdem weist die Kavität 400 zwei zweite Öffnungen 404 für jeweils einen zweiten Schmelzstrom 406 aus dem zweiten Werkstoff auf. Das Trägerelement besteht aus dem ersten Werkstoff des ersten Schmelzstroms 306 und die Energieabsorptionselemente werden durch den zweiten Werkstoff der zweiten Schmelzströme 406 ausgebildet. In den Bereichen 408 und 410 treffen die Schmelzströme der beiden Werkstoffe aufeinander und es wird eine formschlüssige und/oder stoffschlüssige Verbindung zwischen den Werkstoffen ausgebildet. Durch die Form der Kavität 400 und der Bereiche 408 und 410 wird durch den ersten Werkstoff das Trägerelement geformt und durch den zweiten Werkstoff die Energieabsorptionselemente. Die Energieabsorptionselemente sind dabei stoffschlüssig und/oder formschlüssig mit dem Trägerelement in den Bereichen 408 und 410 verbunden.

Die stoffschlüssige und/oder formschlüssige Verbindung der Energieabsorptionselemente aus dem zweiten Werkstoff mit dem Trägerelement aus dem ersten Werkstoff ist vorteilhaft, da so auf einfache Weise mit einem einzigen Werkzeug das Trägerelement mit den Energieabsorptionselementen hergestellt werden kann, obwohl die Energieabsorptionselemente und das Trägerelement aus verschiedenen Werkstoffen bestehen. Es entfällt somit eine nachträgliche Befestigung der Energieabsorptionselemente an dem Trägerelement. Durch die Form der Kavität kann die Form des Trägerelements und der Energieabsorptionselemente bestimmt werden. Beispielsweise können die Energieabsorptionselemente Waben, Rippen oder Röhrenstrukturen aufweisen.

Figur 5 zeigt ein Trägerelement 500 an dessen Enden sich jeweils ein Energieabsorptionselement 502 befindet. Die Energieabsorptionselemente 502 sind stoffschlüssig und/oder formschlüssig mit dem Trägerelement 500 mit einem Verfahren nach einer Ausführungsform der Erfindung verbunden worden. Außerdem zeigt Figur 5 einen Längsträger 504. Die Energieabsorptionselemente 502 sind nun so ausgebildet, dass sie an dem Längsträger 504 befestigt werden können. Eine Befestigung der Energieabsorptionselemente 502 an den Längsträgern 504 kann beispielsweise über Schrauben 506 erfolgen. Die Längsträger 504 sind in Figur 5 nur teilweise dargestellt. Die Längsträger verlaufen entlang der Längsachse des Autos, mit anderen Worten in Fahrtrichtung. Die Längsträger 504 bilden einen tragenden Teil der Karosserie des Autos. Durch die Befestigung der Energieabsorptionselemente 502 an den Längsträgern 504 wird auch das Trägerelement 500 fixiert, weil dies durch die formschlüssigen und/oder stoffschlüssigen Verbindungen mit den Energieabsorptionselementen verbunden ist.

Die Energieabsorptionselemente ragen zumindest teilweise in die Längsträger 504 hinein. Alternativ können die Energieabsorptionselemente 502 auch ganz in die Längsträger 504 hineinragen, sodass sich bei einem Aufprall das Trägerelement in den Längsträger schiebt. Somit wird der Platzbedarf für die Energieabsorptionselemente verringert. Im Falle eines Unfalls fungieren die Energieabsorptionselemente 502 in einer Frühphase als Knautschzone. Das Trägerelement und somit auch das gesamte Frontendmodul kann somit durch die Energieabsorptionselemente 502 einen hohen Betrag der Aufprallenergie des Unfalls aufnehmen, ohne dass dieser Betrag an die Längsträger 504 und damit an tragende Karosserieteile des Fahrzeugs weitergeleitet wird. Es werden also Lasten abgebaut, ohne die tragende Struktur der Karosserie zu beschädigen.

In Figur 5 ist außerdem zu beachten, dass die Energieabsorptionselemente nicht nur durch die Schrauben 506 an dem Längsträger befestigt sind, sondern dass die Energieabsorptionselemente 502 sich im Falle eines Unfalls gegen eine Zwischenwand 508 der Längsträger abstützen. Im Falle eines Unfalls wird also nicht alleine die Schraubverbindung zur Fixierung der Energieabsorptionselemente 502 verwendet, sondern auch die Zwischenwand 508 der Längsträger 504.

Falls die Energieabsorptionselemente 502 ganz in die Längsträger 504 hineinragen, kann das Trägerelement 500 auch direkt über die Schraubverbindungen mit dem Längsträger 504 verbunden werden. Dies ergibt eine besonders steife Verbindung des Trägerelements mit den Längsträgern der Karosserie.

Da die Energieabsorptionselemente 502 zur Absorption von Energie im Falle eines Unfalls ausgebildet sind, sind die Energieabsorptionselemente 502 vorzugsweise aus einem Kunststoff gefertigt, der im Falle einer Deformation besonders viel Energie aufnimmt. Die Energieaufnahme kann zusätzlich noch dadurch gesteigert werden, dass die Energieabsorptionselemente 502 eine Waben-, Rippen- oder Röhrenstruktur aufweisen. Eine solche Strukturierung der Energieabsorptionselemente 502 kann beispielsweise durch eine geeignete Ausgestaltung der Kavität, die bei der Herstellung der Energieabsorptionselemente und des Trägerelements verwendet wird, erreicht werden.

Eine Waben-, Rippen- oder Röhrenstruktur kann beispielsweise dadurch erreicht werden, dass die Energieabsorptionselemente schichtweise hergestellt werden, wobei anschließend die Schichten miteinander form- oder stoffschlüssig miteinander verbunden werden. Eine solche Verbindung kann beispielsweise durch kleben oder schweißen erreicht werden. Beispielsweise könnte zunächst ein erster Teil der Energieabsorptionselemente hergestellt werden und anschließend ein zweiter Teil. Die beiden Teile werden dann miteinander verbunden, wodurch eine Waben-, Rippen- oder Röhrenstruktur entsteht. Es ist zu beachten, dass eine Herstellung auch aus mehr als zwei Teilen erfolgen kann.

Das Trägerelement 500 kann beispielsweise aus Kunststoff gefertigt sein. In diesem Falle kann das Trägerelement 500 hohl oder nicht hohl ausgebildet sein. Außerdem kann das Trägerelement 500 mit einem oder mehreren Metallträgerteilen ausgebildet sein. In diesem Fall müssen die Metallträgerteile vor dem Spritzgussverfahren in die Kavität eingeführt werden und dann mit dem ersten Werkstoff umspritzt werden. Metallträgerteile erhöhen die Stabilität des Trägerelements, während eine hohle Ausgestaltung des Trägerelements 500 das Gewicht reduziert.

Figur 6 zeigt ein Trägerelement 500 mit Energieabsorptionselementen 600. Die Energieabsorptionselemente 600 sind mit Schrauben 506 an Längsträgern 504 der Karosserie des Kraftfahrzeugs befestigt. Im Falle eines Unfalls stützt sich ein zentraler Teil 602 der Energieabsorptionselemente an einer Endwand 604 der Längsträger 504 ab. Zusätzlich werden die Energieabsorptionselemente 600 über die Schraubverbindungen 506 an den Längsträgern 504 befestigt. Bei einem Unfall absorbieren nun die Energieabsorptionselemente, vor allem die zentralen Bereiche 602, einen hohen Anteil der Unfallenergie, ohne dass diese auf die Längsträger 504 weitergeleitet wird. Dafür bestehen die Energieabsorptionselemente 600 ähnlich wie die Energieabsorptionselemente 502 aus einem Kunststoff, der bei einer Verformung viel Energie absorbiert.

Die Energieabsorptionselemente 600 wurden nach einem Verfahren nach Ausführungsformen der Erfindung mit dem Trägerelement 500 mit einer stoffschlüssigen und/oder formschlüssigen Verbindung verbunden. Das Trägerelement 500 und die Energieabsorptionselemente 600 wurden also mit einem einzigen Werkzeug in einem einzigen Einspritzvorgang hergestellt.

### Bezugszeichenliste

- 100: Spritzgießvorrichtung
- 102: Spritzgießwerkzeug
- 104: Kavität
- 106: Schmelzleitsystem
- 108: Schmelzleitsystem
- 110: Spritzeinheit
- 112: Spritzeinheit
- 114: Regelvorrichtung
- 116: Prozessor
- 118: Speicher
- 120: Interface
- 122: drahtloser Sensor
- 124: kontaktbehafteter Sensor
- 126: Ausbildungsort der formschlüssigen und/oder stoffschlüssigen Verbindung
- 300: Kavität
- 302: Öffnung
- 304: Öffnung
- 306: Schmelzstrom
- 308: Schmelzstrom
- 310: Bereich
- 312: Bereich
- 400: Kavität
- 402: Öffnung
- 404: Öffnung
- 406: Schmelzstrom
- 408: Bereich
- 410: Bereich
- 500: Trägerelement
- 502: Energieabsorptionselement
- 504: Längsträger
- 506: Schraube
- 508: Zwischenwand
- 600: Energieabsorptionselement
- 602: zentraler Teil
- 604: Endwand

## Patentansprüche

1. Spritzgussverfahren zur Herstellung eines Trägerelements (500) eines Frontendmoduls für ein Kraftfahrzeug mit zwei Energieabsorptionselementen (502; 600) in einer Kavität (104; 300; 400) eines Werkzeugs (102), wobei das Trägerelement (500) aus einem ersten Werkstoff besteht und die Energieabsorptionselemente (502; 600) aus einem zweiten Werkstoff bestehen, wobei das Verfahren folgende Schritte aufweist:
- gleichzeitiges Einspritzen eines ersten Schmelzstroms (306) des ersten Werkstoffes über eine erste Öffnung (302; 402) und eines zweiten Schmelzstroms des zweiten Werkstoffes über eine zweite Öffnung (304; 404) in die Kavität (104; 300; 400),
- Regelung des Einspritzvorgangs zum Erhalt von zwei formschlüssigen und/oder stoffschlüssigen Verbindungen zwischen dem Trägerelement (500) und den zwei Energieabsorptionselementen (502; 600),
- Erfassung von Messdaten über den ersten und den zweiten Schmelzstrom an den Ausbildungsorten (126) der formschlüssigen und/oder stoffschlüssigen Verbindungen,
- Anpassung der Regelung zur Optimierung des Einspritzvorgangs in Abhängigkeit von den erfassten Messdaten.

2. Verfahren nach Anspruch 1, wobei jedes der Energieabsorptionselemente (502; 600) zur Befestigung an einem Längsträger (504) des Kraftfahrzeugs ausgebildet ist.

3. Verfahren nach einem der vorigen Ansprüche, wobei die Erfassung der Messdaten über die drei Schmelzströme an den Ausbildungsorten (126) jeweils eine Messdatenerfassung an räumlichen Positionen umfasst, die unmittelbar an räumliche Begrenzungen der Kavität (104) in Höhe der Ausbildungsorte (126) angrenzen.

4. Verfahren nach einem der vorigen Ansprüche, wobei die Messdaten Temperaturwerte und/oder Druckwerte und/oder Fließgeschwindigkeiten und/oder Viskositätswerte der Schmelzströme umfassen.

5. Verfahren nach einem der vorigen Ansprüche, wobei die Erfassung der Messdaten über mehrere Sensoren (122; 124) erfolgt, wobei jedem Schmelzstrom zumindest ein Sensor zugeordnet ist.

6. Verfahren nach Anspruch 4 oder 5, wobei es sich bei den Sensoren um Sensoren (122) zur drahtlosen Erfassung der Messdaten handelt.

7. Verfahren nach einem der vorigen Ansprüche, wobei die Regelung des Einspritzvorgangs eine individuelle Regelung des Einspritzvorgangs der einzelnen Schmelzströme umfasst.

8. Verfahren nach einem der vorigen Ansprüche, wobei die Regelung des Einspritzvorgangs eine Regelung des Einspritzzeitpunkts und/oder des Einspritzdrucks und/oder der Einspritztemperatur der verschiedenen Schmelzströme umfasst.

9. Verfahren nach einem der vorigen Ansprüche, ferner mit dem Schritt einer Kalibrierung des Einspritzvorgangs durch Regelung des Einspritzvorgangs zum Erhalt der gewünschten formschlüssigen und/oder stoffschlüssigen Verbindung an den Ausbildungsorten (126), wobei es sich bei der Anpassung der Regelung um eine Nachregelung auf den kalibrierten Einspritzvorgang handelt.

10. Verfahren nach einem der vorigen Ansprüche, wobei die Kavität (104; 300; 400) so ausgebildet ist, dass das Trägerelement (500) zwischen den Energieabsorptionselementen (502; 600) hohl ausgebildet wird.

11. Verfahren nach einem der vorigen Ansprüche, wobei die Kavität (104; 300; 400) so ausgebildet ist, dassdie Energieabsorptionselemente (502; 600) mit einer Röhrenstruktur ausgebildet werden.

12. Verfahren nach einem der Ansprüche 1-10, wobei die Kavität (104; 300; 400) so ausgebildet ist, dass die Energieabsorptionselemente (502; 600) mit einer Rippenstruktur ausgebildet werden.

13. Verfahren nach einem der vorigen Ansprüche, wobei in der Kavität (104; 300; 400) Metallträgerteile so angeordnet sind, dass die Metallträgerteile zumindest teilweise von dem ersten Werkstoff umschlossen werden.

14. Computerprogrammprodukt mit von einem Prozessor ausführbaren Instruktionen zur Durchführung der Verfahrensschritte des Verfahrens nach einem der vorigen Ansprüche.

15. Trägerelement (500) für ein Frontendmodul eines Kraftfahrzeugs, wobei das Trägerelement (500) Energieabsorptionselemente (502; 600) umfasst, und wobei das Trägerelement (500) nach einem Verfahren nach einem der Ansprüche 1-13 hergestellt wurde.
